# EUROPEAN PATENT SPECIFICATION

(11) **EP 3 760 747 B1**
(45) Date of publication and mention of the grant of the patent: **27.12.2023**
(21) Application number: 19761292.2
(22) Date of filing: 25.02.2019
(51) Int. Cl.: C22B 1/16, C22B 1/20, C22B 1/24, C22B 1/245, C22B 1/243, B01J 2/12

(54) **METHOD FOR MANUFACTURING GRANULATED RAW MATERIAL FOR SINTERING**
VERFAHREN ZUR HERSTELLUNG VON KÖRNIGEM ROHMATERIAL FÜR EIN SINTERN
PROCÉDÉ DE FABRICATION DE MATIÈRE PREMIÈRE GRANULAIRE POUR UN FRITTAGE

(30) Priority: 28.02.2018 JP 2018035688
(43) Date of publication of application: 06.01.2021
(73) Proprietor: JFE Steel Corporation, Tokyo 100-0011 (JP)
(72) Inventor: HIROSAWA, Toshiyuki, Tokyo 100-0011 (JP); YAMAMOTO, Tetsuya, Tokyo 100-0011 (JP); HIGUCHI, Takahide, Tokyo 100-0011 (JP); GOTO, Shigeaki, Tokyo 100-0011 (JP); WATANABE, Soichiro, Tokyo 100-0011 (JP); TAKIGAWA, Yohei, Tokyo 100-0011 (JP); HANDA, Eiji, Tokyo 100-0011 (JP); TSUTSUMI, Ryuji, Villanueva, Misamis Oriental (PH)
(74) Representative: Haseltine Lake Kempner LLP
(86) International application number: PCT/JP2019/007079
(87) International publication number: WO 2019/167888

(56) References cited:
- CN-A- 107 304 461
- JP-A- H0 711 348
- JP-A- S59 229 423
- JP-A- S59 229 423
- KR-A- 20120 000 774

## Description

### Technical Field

The invention relates to a method of manufacturing granulated raw material for sintering, and particularly, proposes a method for improving the productivity of sintered ore which obtained by using the raw material, through the development of the granulated raw material for sintering effective for reducing the size of a wet zone that appears in a material charged layer on a pallet of a sintering machine.

### Background Art

In an operation of a conventional sintering machine, efforts have been made to reduce the proportion of the wet zone in the material charged layer on the pallet, thereby mainly reducing the used amount of carbon material and improving sintering productivity. For example, Patent Literature 1 discloses a method of manufacturing sintered ore, in which a raw material for sintering containing carbon material is added with water and binder for granulation, and then dried using a rotary kiln to manufacture granulated raw material for sintering, which is charged and sintered on a pallet. In the prior art, however, a special facility such as rotary kiln is necessary to dry the granulated raw material for sintering.

There is another proposal for a method in which a raw material for charging into a blast furnace, i.e. lump ore is charged into a cooler attached to a sintering machine and previously dried. That is, the method proposes charging the lump ore for the blast furnace into the portion of the cooling device (cooler) of the sintering machine where the temperature inside the device (temperature of cooled sintered ore) reaches 300 to 600 °C, and drying the lump ore in advance.

Patent Literature 3 discloses a preparation method of iron ore pellets for sintering. More particularly, a strength hybrid technique for sintering production is disclosed.

Patent Literature 4 discloses blowing superheated steam or saturated steam into a granulator during the granulation of starting materials for sintering to preheat the materials and to supply water required to granulate the materials.

Patent Literature 5 discloses a sinter production device having a drum member, an inlet for raw sintering material and a steam injection instrument.

### Citation List

### Patent Literature

Patent Literature 1: JP-A-2007-169780
Patent Literature 2: JP-A-2013-119667
Patent Literature 3: CN 107304461A
Patent Literature 4: JP S59 229423
Patent Literature 5: KR 2012-0000774

### Summary of Invention

### Technical Problem

In order to improve the productivity of sintered ore in any of the prior arts, for example, the method of preheating and drying compounding raw material for sintering (granulated raw material for sintering) in advance (Patent Literature 1) requires new special equipment, causing a problem of an increase in equipment cost, and also requires fuel in addition to a coagulating material used in a sintering process, causing a problem of cost increase.

Patent Literature 2 discloses a method of using heat source of a cooler in a sintering machine in preheating lump iron ore for charging in a blast furnace. Thus, the method is not a technique of controlling a wet zone of a material charged layer on a pallet through the improvement of granulated raw material for sintering itself and thereby improving the productivity and quality of the sintered ore.

Therefore, the object of the invention is to solve the aforementioned problems inherent to the prior arts, particularly, to propose a novel method of manufacturing a granulated raw material for sintering by heating to not lower than a certain temperature using vapor in granulation, whereby gas permeability is improved and also the productivity of sintered ore is improved when the granulated raw material for sintering is charged in a sintering machine.

### Solution to Problem

In the present invention, in order to solve the above-mentioned problems, vapor such as water vapor is blown into a granulator such as a drum mixer, an Eirich mixer, or a pelletizer used in granulation of a compounding raw material for sintering to granulate the compound material for sintering while heating, whereby a heat-granulated raw material for sintering (granulated raw material for sintering) having a temperature, for example, increased higher than the initial temperature of the compounding raw material for sintering before charged in the drum mixer, more preferably, a temperature of not lower than 60 °C is formed and charged on a pallet of a sintering machine.

That is, the present invention is a method of manufacturing a granulated raw material for sintering, wherein when a compounding raw material for sintering formed by compounding iron ore powder, carbon material, and auxiliary material is granulated in a granulator, water vapor is blown into the granulator thereby to increase the temperature of the granulated raw material for sintering higher than that of the compounding raw material for sintering before charged into the granulator by not less than 10°C, wherein the blowing amount of the water vapor into the granulator is not less than 3.0 kg/t-s; and wherein when the temperature of the granulated raw material for sintering discharged from the granulator exceeds 60°C, water content equivalent to not less than 0.5% but not more than 3.0 mass% of the water content of the granulated raw material for sintering after granulation is supplied by adding industrial water, hot water, or condensate water in addition to the water content supplied by blowing water vapor.

In the invention, it is more preferable that:
(1) The superheating degree of the water vapor is not more than 13.5°C in the water vapor pipe;
(2) The water vapor is blown into the first half portion of the granulator which is from the material charging position to the almost middle position in the lengthwise direction thereof;

### Advantageous Effects of Invention

According to the invention, it is possible to manufacture a granulated raw material for sintering having a temperature higher than the initial temperature of the starting material (temperature of the compounding raw material for sintering before charged into the granulator) by not less than 10°C. Therefore, when such a granulated raw material for sintering is charged onto the pallet of the sintering machine, the gas permeability in the raw material charged layer is improved, leading to an improvement in the production rate of the sintered ore.

### Brief Description of Drawings

FIG. 1 is a diagram illustrating a process flow according to the invention, wherein FIG. 1(a) is a schematic view of the arrangement of the drum mixer and the vapor pipe, and FIG. 1(b) is a cross-section view of the internal condition of the drum mixer.
FIG. 2 is a chart showing the relationship between the water vapor blowing time and the temperature rise of the granulated raw materials for sintering when the water vapor blowing time is changed.
FIG. 3 is a chart showing the relationship between the temperature of the granulated raw material for sintering and the water content thereof after the granulation at the discharge side of the drum mixer.
FIG. 4 is a chart showing the relationship between the water content of the granulated raw material for sintering and the harmonic mean diameter thereof when vapor is blown in the first half portion of the drum mixer and when vapor is blown over the whole portion of the drum mixer.

### Description of Embodiments

The granulated raw material for sintering (quasi-particles) for charging onto the pallet of the sintering machine for the production of sintered ore is usually prepared as follows. That is, a compounding raw material for sintering comprising: iron ore powders having an average diameter of approximately 1.0 to 5.0 mm; miscellaneous iron source such as various dusts generated in an ironworks; CaO-containing material such as limestone, quicklime, and steelmaking slag; coagulation material such as coke breeze and anthracite; and arbitrary compounding material such as refined nickel slag, dolomite, MgO-containing material comprised of serpentine, SiO₂-containing material comprised of silica (silica sand) is first stored in a hopper, and each material for sintering is cut out on a conveyor from the hopper in a predetermined ratio and compounded to form a compounding raw material for sintering. Then, the compounding raw material for sintering is charged into the granulator, agitated and mixed while adding the necessary humidity, and granulated to form a granulated raw material for sintering (quasi-particles) having an average particle diameter of about 3.0 to 6.0 mm.

The average particle diameter means an arithmetic average diameter (Dm), which is defined as "Dm = Σ (Vi/di)" (where Vi is the existence ratio of particles in the i-th particle size range and di is the representative particle diameter of the i-th particle size range).

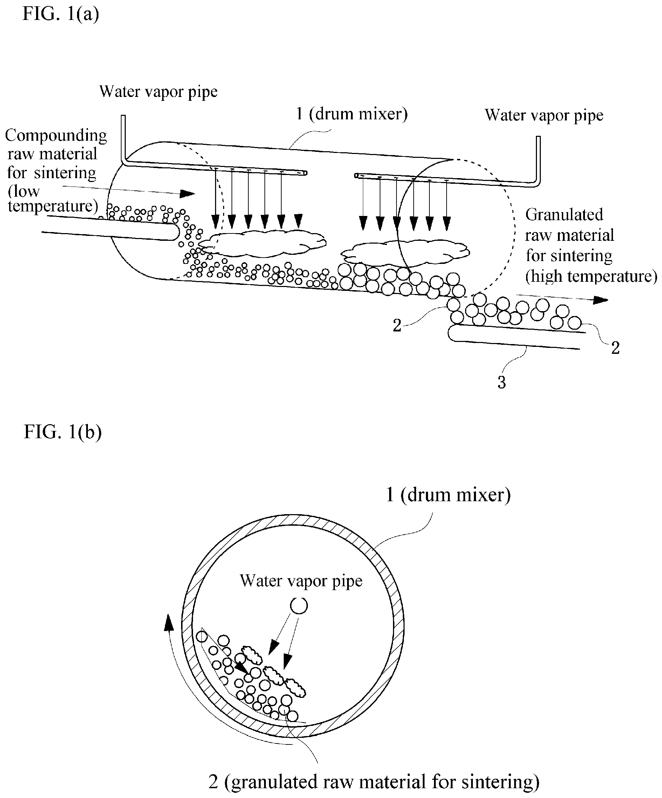

As the granulator used for granulating the compounding raw material for sintering in the invention, the Eirich mixer or pelletizer can be used as described above. The drum mixer as shown in FIG. 1 is preferably used, and also multiple drum mixers may be used. The following will be explained using a drum mixer as a granulator.

The granulated raw material for sintering (quasi-particles) formed by the granulation in the drum mixer is usually charged and deposited onto a pallet of a sintering machine to have a thickness (height) of approximately 400 to 600 mm through a charging device disposed on the sintering machine to form a raw material charged layer. Then, the carbon material contained in the raw material charged layer is ignited by an ignition furnace disposed above the raw material charged layer. The carbon material in the raw material charged layer is sequentially combusted by downward suction by a window box disposed under the pallet, and combustion heat generated at this time is used to burn and melt the charged raw material (raw material for sintering) for sintering. Thereafter, a sintered layer (sintered cake) formed on the pallet is sieved after a crusher and sintering cooler, and collected by separating into product sintered ore in the form of a lump of not less than 5mm and return ore of less than 5mm.

The present invention relates to a method of manufacturing granulated raw material for sintering (quasi-particles) as the pretreatment of raw material for sintering used in the above-mentioned production process of sintered ore. FIG. 1 is a diagram illustrating the process of manufacturing (granulating) the granulated raw material for sintering 2 by using a drum mixer 1.

That is, the feature of the present invention is that when granulating a compounding raw material for sintering by a granulator such as drum mixer 1, which granulates the compounding raw material for sintering using a rolling motion, for example, water vapor is blown (jetted) into the drum mixer 1, so that the granulated raw material for sintering 2 has a temperature at least 10 °C higher than the initial temperature of the compounding raw material for sintering when charged into the drum mixer 1 (for example, the temperature at the charging side of the drum mixer of about the ambient temperature to 35 °C) by heating, and preferably the compounding raw material for sintering is heated and humidified for granulation so that the temperature of the granulated raw material for sintering is about 45 °C to 70 °C.

In order to increase the temperature of the granulated raw material for sintering higher than the temperature of the compounding raw material for sintering at the charging side of the drum mixer by not less than 10°C, it is required to blow the water vapor in an amount of not less than 3 kg/t-s, preferably not less than 4 kg/t-s up to about 25 kg/t-s from the position described later. The blowing amount is effective for improving the production rate of sintered ore by securing the desirable water content as a granulated raw material for sintering and ensuring good gas permeability of the raw material charged layer.

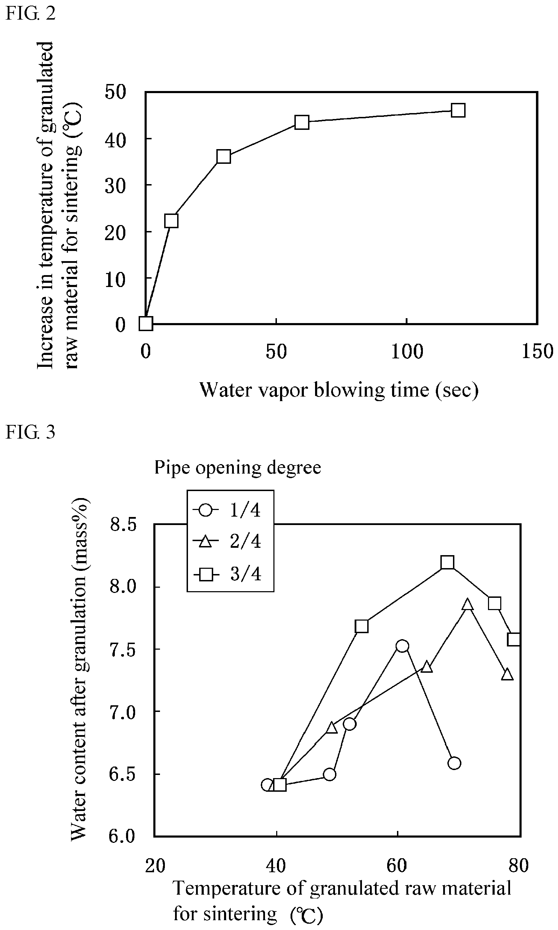

In general, the condensation heat of water at 100°C is not less than 2200 kJ/kg, and the heat amount when water vapor turns back into liquid water is very large even compared to the specific heat of water, or 4.2 kJ/kg. FIG. 2 is a chart showing the temperature change of the granulated raw material for sintering after granulation when the blowing time of water vapor is changed. As seen from FIG. 2, when the condensation heat of water vapor is used, the temperature of the compounding raw material for sintering can be easily raised to about 45°C or higher, preferably to about 70 °C, which is higher than the temperature of the compounding raw material for sintering just before charged into the drum mixer by not less than 10°C, by the granulation process in about several tens of seconds. In addition, it is desirable that the superheating degree of water vapor in the water vapor pipe is lower because the amount of water vapor dissipated outside the drum mixer without condensation is reduced and the amount of water vapor used can be reduced. Here, the superheating degree of water vapor is calculated by subtracting the saturated vapor temperature at that pressure from the vapor temperature.

According to the research of the inventors, however, when the temperature of the granulated raw material for sintering (quasi-particles) exceeds about 60 °C, evaporation from the granulated raw material for sintering becomes active, which leads to not only a decrease in the water content of the quasi-particles after granulation, but also remarkable heat absorption due to the latent heat of evaporation, especially at temperatures of not lower than 70°C.

For example, FIG. 3 is a chart showing the change in the water content value of the granulated raw material for sintering at the discharge side of the drum mixer with respect to the temperature of the granulated raw material for sintering. As seen from this figure, when the temperature of the granulated raw material for sintering reaches around 60°C to 70°C, water vapor condensation due to the increase in temperature causes a rise in the water content, but at the same time, when the temperature is reached, the water content begins to decrease, causing so-called evaporation of water from the granulated raw material for sintering. That is, when the opening degree of the vapor pipe is 1/4, 2/4, or 3/4, the larger the opening degree, the faster the rise of water content due to heating. In the experiment of the inventors as shown in FIG. 3, the temperature of the granulated raw material for sintering depends on the opening degree of the pipe, but contrarily, the water content of the material decreases at around 60 to 70°C, around which humidification changes to drying.

Therefore, in the present invention, when the temperature of the granulated raw material for sintering (quasi-particles) discharged from the drum mixer exceeds 60 to 70°C, it is required to add industrial water, hot water, or condensate water of water vapor, taking into consideration the water content that will condense by the blowing of water vapor, so that the water content is adjusted to be higher than, the target water content (6.5 mass%) of the granulated raw material for sintering by about 0.5 mass% to 3.0 mass%. Moreover, when the superheating degree of water vapor in the water vapor pipe exceeds 13.5 °C, the amount of water vapor dissipated outside the drum mixer increases without being condensed, and at the same time, it is recognized that the increase in water content of the granulated raw material for sintering due to condensate water tends to be suppressed. Therefore, when the superheating degree in the water vapor pipe is not higher than 13.5°C, the condensation of water vapor is promoted in the drum mixer to reduce the used amount of water vapor, and at the same time the water content of the granulated raw material for sintering due to the condensed water increases to easily adjust the water content, which is desirable.

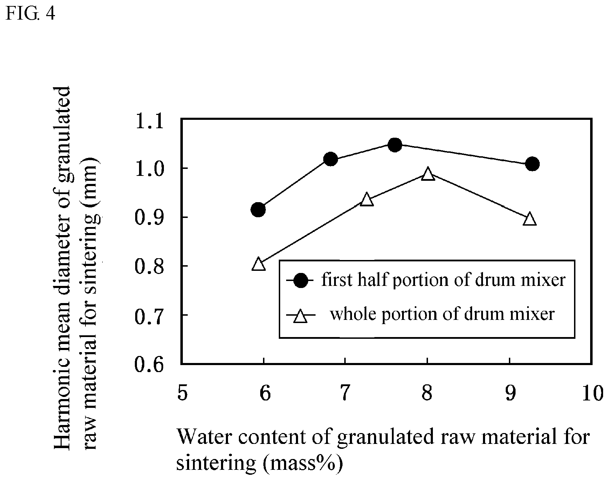

Next, in the implementation of the present invention, it is also necessary to consider the effect of the blowing position of water vapor into the drum mixer. FIG. 4 shows the effects when water vapor is blown in the first half portion of the drum mixer and when it is blown in the whole portion of the drum mixer. As seen from FIG. 4, the harmonic mean diameter of the quasi-particles takes the local maximum when the granulated raw material for sintering has an appropriate water content of around 7 to 8 mass%. The results show that when water vapor is blown into the first half portion of the drum mixer, the harmonic mean diameter of the granulated raw material for sintering (quasi-particles) is larger and the granulation effect is superior. The first half portion is a portion from the charging point of the raw material to the almost middle in the lengthwise direction of the granulator. The harmonic mean diameter (Dh) used here is the particle diameter defined by "Dh = 1/Σ (Vi/di)", where Vi is the existence ratio of particles in the i-th particle size range and di is the representative particle diameter of the i-th particle size range, and is an index used to evaluate the gas permeability of the powder layer. The larger the value of the harmonic mean diameter (Dh), the more advanced the granulation is and the better the air permeability.

### Examples

Table 1 shows an example comparing an example conforming to the method of the present invention with a comparative example following the conventional method. In these examples, the gas permeability index, production rate, and the like are compared based on Comparative Example 1 in which water vapor is not blown into the drum mixer (in Comparative Example 1, the temperature of the granulated raw material for sintering is 42.5 °C due to the heat generated when CaO added as the binder (≦2 mass%) reacts with water to form CaOH₂ (+7.5 °C increase in temperature: common in all cases) while the temperature of the compounding raw material for sintering before charged into the drum mixer is 35 °C). In Comparative Example 2, the addition of a very small amount of water vapor (1.9 kg/t-s) causes the temperature of the granulated raw material for sintering to increase only by 4.8 °C, which is an increase of less than 10 °C, and has no remarkable effect on the production rate or the like. On the other hand, in Example 1, the temperature of the granulated raw material for sintering increases, by more than 10 °C, to reach 56.0 °C, showing a clear effect in terms of the gas permeability index and production rate, and a large effect is also seen in Example 2 where the temperature increase is about 35 °C. Example 3 is an example that water vapor is blown into the first half portion of the drum mixer (0.5 from the charging position of the granulator when the total length of the granulator is 1), and as shown in FIG. 4, the harmonic mean diameter of the granulated raw material for sintering (quasi-particles) increases, resulting in significant improvements in terms of the gas permeability index and production rate. In any case, it is considered to be effective that the blowing amount of water vapor is not less than 3 kg/t-s, preferably not less than 4 kg/t-s in order to increase the temperature of the granulated raw material for sintering at the discharge side of the drum mixer higher than the temperature at the charging side by not less than 10 °C.

**Table 1**

| | | Comparative Example 1 | Comparative Example 2 | Example 1 | Example 2 | Example 3 |
|---|---|---|---|---|---|---|
| Temperature of granulated raw material for sintering at discharge side of drum mixer | °C | 42.5 | 47.3 | 56.0 | 70.2 | 69.7 |
| Blowing position of water vapor | | - | Whole portion | Whole portion | Whole portion | First half portion |
| Blowing amount of water vapor | kg/t-s | 0 | 1.9 | 4.4 | 19.9 | 20.1 |
| Harmonic mean diameter of granulated raw material for sintering (quasi-particles) | mm | 0.95 | 0.96 | 0.94 | 0.95 | 1.05 |
| Gas permeability index (J.P.U) | - | 17.0 | 17.2 | 18.5 | 19.7 | 20.7 |
| Yield | % | 82.3 | 81.6 | 80.9 | 80.0 | 80.2 |
| Strength | % | 73.5 | 73.4 | 73.4 | 73.3 | 73.4 |
| Production rate | t/hr/m² | 1.29 | 1.30 | 1.34 | 1.39 | 1.41 |
| Effect for increase in production rate | % | - | 0.83 | 3.80 | 7.12 | 8.79 |

| | | | | | | |
|---|---|---|---|---|---|---|
| 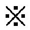 The temperature of compounding raw material for sintering at the charging side of the drum mixer: 35 °C | | | | | | |

### Industrial Applicability

The method according to the present invention has been explained taking the example of heating the compounding raw material for sintering by water vapor.

### Reference Signs List

- 1: drum mixer
- 2: granulated raw material for sintering

## Claims

1. A method of manufacturing a granulated raw material for sintering,
wherein when a compounding raw material for sintering formed by compounding iron ore powder, carbon material, and auxiliary material is granulated in a granulator, water vapor is blown into the granulator thereby to increase the temperature of the granulated raw material for sintering to be higher than that of the compounding raw material for sintering before charged into the granulator by not less than 10 °C, **characterized in that**
a blowing amount of the water vapor into the granulator is not less than 3.0 kg/t-s, and
when the temperature of the granulated raw material for sintering discharged from the granulator exceeds 60°C, water content from industrial water, hot water, or condensate water is supplied so as to add water content equivalent to not less than 0.5% but not more than 3.0 mass% of that of the granulated raw material for sintering after granulation, in addition to the water content supplied by blowing water vapor.

2. The method of manufacturing a granulated raw material for sintering according to claim 1,
wherein a superheating degree of the water vapor is not more than 13.5 °C in the water vapor pipe.

3. The method of manufacturing a granulated raw material for sintering according to claim 1 or 2,
wherein the water vapor is blown into the first half portion of the granulator which is from the material charging position to the almost middle position in the lengthwise direction thereof.

## Patentansprüche

1. Verfahren zum Herstellen eines granulierten Rohmaterials zum Sintern,
wobei, wenn ein Verbundrohstoff zum Sintern, der durch das Verbinden von Eisenerzpulver, Kohlenstoffmaterial und Hilfsmaterial gebildet wird, in einem Granulator granuliert wird, Wasserdampf in den Granulator geblasen wird, um dadurch die Temperatur des granulierten Rohmaterials zum Sintern um nicht weniger als 10 °C zu erhöhen, um höher zu sein als die des Verbundrohstoffs zum Sintern vor dem Einfüllen in den Granulator, **dadurch gekennzeichnet, dass**
die Menge des in den Granulator eingeblasenen Wasserdampfs nicht weniger als 3,0 kg/t-s ist, und
wenn die Temperatur des aus dem Granulator austretenden granulierten Rohmaterials zum Sintern 60°C übersteigt, ein Wassergehalt aus Brauchwasser, Heißwasser oder Kondensatwasser zugeführt wird, um einen Wassergehalt zu erreichen, der nicht weniger als 0,5%, aber nicht mehr als 3,0 Massen-% des Wassergehalts des granulierten Rohmaterials zum Sintern nach Granulieren entspricht, zusätzlich zu dem Wassergehalt, der durch Einblasen von Wasserdampf zugeführt wird.

2. Verfahren zum Herstellen eines granulierten Rohmaterials zum Sintern gemäß Anspruch 1,
wobei ein Überhitzungsgrad des Wasserdampfs in der Wasserdampfleitung nicht mehr als 13,5 °C ist.

3. Verfahren zum Herstellen eines granulierten Rohmaterials zum Sintern gemäß Anspruch 1 oder 2,
wobei der Wasserdampf in den ersten Halbabschnitt des Granulators geblasen wird, der sich von der Materialbeschickungsposition bis zu der fast mittleren Position in dessen Längsrichtung erstreckt.

## Revendications

1. Un procédé de fabrication d'une matière première granulée pour le frittage,
dans lequel, lorsqu'une matière première de composition pour le frittage formée par la composition de poudre de minerai de fer, de matériau de carbone et de matériau auxiliaire est granulée dans un granulateur, de la vapeur d'eau est soufflée dans le granulateur afin d'augmenter la température de la matière première granulée pour le frittage d'au moins 10 C par rapport à celle de la matière première de composition pour le frittage avant qu'elle ne soit chargée dans le granulateur, **caractérisé en ce que**
la quantité de vapeur d'eau soufflée dans le granulateur n'est pas inférieure à 3,0 kg/t-s, et
lorsque la température de la matière première granulée pour le frittage déchargée du granulateur dépasse 60°C, de l'eau provenant de l'eau industrielle, de l'eau chaude ou de l'eau de condensation est fournie afin d'ajouter une teneur en eau équivalente à au moins 0,5% mais pas plus de 3,0% en masse de la matière première granulée pour le frittage après la granulation, en plus de la teneur en eau fournie par la vapeur d'eau soufflée.

2. Le procédé de fabrication d'une matière première granulée pour le frittage selon la revendication 1,
dans lequel le degré de surchauffe de la vapeur d'eau n'est pas supérieur à 13,5 °C dans la conduite de vapeur d'eau.

3. Le procédé de fabrication d'une matière première granulée pour le frittage selon la revendication 1 ou 2,
dans lequel la vapeur d'eau est soufflée dans la première moitié du granulateur qui va de la position de chargement du matériau à la position quasi centrale dans la direction longitudinale de celui-ci.
